# EUROPEAN PATENT APPLICATION

(11) **EP 2 741 026 A1**
(43) Date of publication of application: **11.06.2014**
(21) Application number: 12196203.9
(22) Date of filing: 08.12.2012
(51) Int. Cl.: F24J 2/52, H01L 31/042

(54) **Fastening system for framing and assembling plate-like components**

(71) Applicant: Contact Italia srl, 70022 Altamura (BARI) (IT)
(72) Inventor: Maggi, Francesco, 70022 Altamura (BA) (IT)
(74) Representative: Vinciguerra, Vincenzo

(57) **Abstract**

Frame (50) designed to be part of a system consisting of two or more of said frames used as a framework for plate-like components (51) and including two or more mounting profiles of which at least one includes an L-shaped or a U-shaped part designed to hold and support one of the edges of said plate-like component.

Said frame is formed by at least one mounting profile (10) equipped with an appendage protruding from the body of said mounting profile and by at least one mounting profile (20) that has a fissure designed to receive said appendage.

In a preferential form of embodiment, said frame is formed by at least two other mounting profiles, one of said two mounting profiles (30) being equipped with an elliptically shaped appendage, and the other one of said two mounting profiles (40) being equipped with an appendage moulded in such a way as to be able to superimpose, partially or completely, said elliptically shaped appendage.

## Description

### Technical field

The present invention relates to the field of mounting systems for plate-like components and, in particular, to the field of frames formed by mounting profiles that are designed to frame flat components of various materials - used with decorative, insulating, covering, or closing functions - with the purpose of making the jointing of several components in rows and columns possible in order to obtain a single flat and impermeable surface.

The purpose of the present invention is to form a particular frame designed to assemble plate-like components in an indefinite number of rows and columns and such as to not require other components besides those making up the frame itself, except for common nuts and bolts.

### Prior Art

Several systems designed to assemble a plurality of plate-like components such as plates and panels are known, especially in the fields of construction and photovoltaics.

The surfaces obtained through putting together rectangular or square-shaped elemental components in several rows and columns are in fact often used for the covering of façades or for the formation of photovoltaic fields to be installed on the sloped roofing of existing buildings or of new construction.

The state of the art includes systems in which the various components, analogous to what occurs with common roofing tiles in pitched roof coverings, are laid down or hung with a partial overlapping of a panel with the corresponding panel in the row below.

Such a technique, although resolving the problem of the horizontal joints between panels, leaves the vertical joints open, which therefore must be sealed with additional components such as, for example, metallic conduits, gaskets made of synthetic materials or covering profiles.

The system referred to in the patent n. FR 2944304 is known, which pertains to the field of solar panels but which is easily extendible to any type of panel without regard to the material out of which it is made. Such a system includes a pair of mounting profiles to be joined to the upper and lower edges of each panel. Said mounting profiles produce the partial overlapping of the single components and simultaneously constrain them to the structure. The lateral joints are sealed by a T-shaped component equipped with gaskets on the lower side of each leg of the "T."

In this system, the large number of components to be installed makes the assembly phase long and complicated.

Furthermore, the sealing of the lateral joints is exclusively entrusted to the gaskets placed on the T-shaped mounting profile. Said gaskets, being exposed to weathering, age with time and lose their effectiveness.

The state of the art also includes the invention referred to in the patent EP 1734588 which includes a single S-shaped mounting profile that makes it possible to eliminate the horizontal joint between panels. In this case as well, if it is desired to make the final structure impermeable, the use of further sealing components on the lateral joints is absolutely necessary.

The state of the art also includes the system referred to in the European patent EP1060520, in which the panels are assembled with the aid of frames that surround every single component. The junction between the lateral mounting profiles that form the frames guarantees the sealing of the vertical joints while the horizontal joints are eliminated through a partial overlapping of every component with the corresponding component in the row below.

In such a system, the components belonging to each column are not connected to one another but simply overlap. The various panels are supported by two hangers that simultaneously guide the overlapping and fasten each component to the supporting structure.

The state of the art also includes the invention referred to in the patent TW 201203571 which includes four mounting profiles of various shapes designed to form a frame that allows the locking together of the various components.

The lateral mounting profiles of said frame provide a reduced overlapping surface and a low-complexity junction. Such a joint does not impede the humidity present in the air from condensing between the joints of the mounting profiles and thus penetrating below the surface formed by the panels.

Any material used to seal such joints would end up being exposed to weathering, thus requiring periodic maintenance and replacement.

Furthermore, the upper and lower mounting profiles, although guaranteeing the impermeability of the horizontal joint between panels, prove to be such as to not permit functioning gaps.

Such a system makes the assembly process particularly long and laborious since every slight inaccuracy or irregularity of the support compromises the behaviour of the joint. All of that complicates and lengthens the assembly phase inasmuch as before laying down each component, the hanger system must be measured and arranged.

Each and every one of the known systems presents some drawbacks which the present invention surmounts, the present invention thus bringing about technical and inventive solutions to existing problems.

### Summary of the Invention

The present invention is set forth and characterized in the main claim. Other characteristics of the present invention are described in the secondary claims.

The purpose of the present invention is that of making a frame, rectangular or square, applicable to a large variety of plate-like components and consisting of components shaped in such a way as to be able to be locked together to form a single impermeable surface that guarantees a mechanical seal against weathering, especially against wind and snow.

A further purpose of the present invention is that of making the assembly of the components simple and fast in such a way as to be completed in the least amount of time possible. This involves the adoption of the smallest possible number of procedures and that each procedure involves the use of a small number of simple components.

The invention described herein permits the elimination of most of the additional components such as hooks, hangers and additional profiles used in the known techniques, without having this compromise the solidity and impermeability of the final surface.

Another advantage of the invention described herein is that of notably limiting the number of procedures during the assembly and considerably increasing the speed of installation.

Furthermore, thanks to its ability to absorb small imprecisions possibly present in the structure, the invention reduces the possibility of assembly errors and of malfunction.

The invention described herein includes four metallic mounting profiles shaped and assembled to form a single frame, all of said mounting profiles being different from one another and each one applied to one of the four sides of the panel.

The said mounting profiles that are part of the invention that is intended to be patented are distinguished by: a base mounting profile, designed to be joined to the base of the panel, a right-hand mounting profile and a left-hand mounting profile, each one joined to one of the two lateral edges of the panel, and a top mounting profile, joined to the upper edge of the panel. To allow the assembly of several components, each mounting profile will always occupy the same position on different panels for which two of the same kind of mounting profiles will never find themselves next to one another.

Two of the mounting profiles of the present invention, that is, the upper one and the lower one, are shaped in such a way that, when the panels are in columns, they lock together in an unambiguous way and without possibility of error.

One of the two mounting profiles, in particular the one positioned on the lower edge of the panel, has an appendage that fits itself into an appropriate place that is found on the mounting profile on the upper edge of the panel below. Said appendage is dimensioned in such a way as to allow the remaining part of the mounting profile to overlap the frame of the panel below, thus sealing the joint and definitively eliminating the possibility of seepage.

This particular and innovative system has many advantages and is an element of originality and inventiveness compared to the state of the art which includes the systems referred to in the patents EP 1060520 e TW 201203571.

In particular, in the invention described herein, the components belonging to every single column are not only partially overlapped but also locked together in such a way as to impede the movement of one in respect to another, making the system much more rigid and the sealing much more effective.

Furthermore, with the mounting profiles of the two frames being constrained together, it is enough to secure one of the mounting profiles to the support structure in order to automatically obtain the fastening of the other one as well, thus avoiding having to use additional hangers and anchorage hooks as occurs, on the other hand, in the system referred to in the above-mentioned patent EP 1060520, reducing at the same time the number of assembly procedures.

The conformation of the junction between the two mounting profiles allows sufficient functional gaps that, unlike the invention described in the patent TW 201203571, allow the compensation of possible imprecisions in the assembly and irregularity of the supporting structure. In this way the joint as proposed by the present invention proves to be less rigid, consequently bestowing elasticity and versatility to the whole structure.

In the invention described herein, the lateral approach of the components is guided instead by the particular shape of the right-hand and left-hand mounting profiles that make up the frame.

The right-hand mounting profile has an innovative elliptically shaped appendage which has a counterpart on the left-hand mounting profile of the adjacent panel.

The advantage brought about by the use of an elliptically shaped appendage are numerous.

Unlike the invention described in the above-mentioned patent EP 1060520, the absence of sharp corners makes the assembly of the various components easier and faster.

Similarly, unlike what is described in the invention TW 201203571, the spacious and more efficient overlapping surface and the presence of two grooves on the surface of the ellipse guarantee the perfect impermeability of the joint as well as the collection and elimination of water possibly present due to condensation.

The absence of additional components such as hooks, hangers and gaskets, typical of the systems known today, and the simplicity of the junctions between the frames, make the invention presented herein extremely easy to assemble with common tools. The frames are fastened to the supporting structure by means of screws, bolts and similar fastening devices and do not require further procedures during the assembly phase.

The surface achieved turns out to be perfectly flat and impermeable.

### Brief Description of the Drawings

All of the characteristics of the present invention will be clear from the following description of a preferential form of embodiment of the invention given as a non-restrictive example, with reference to the attached drawings wherein:

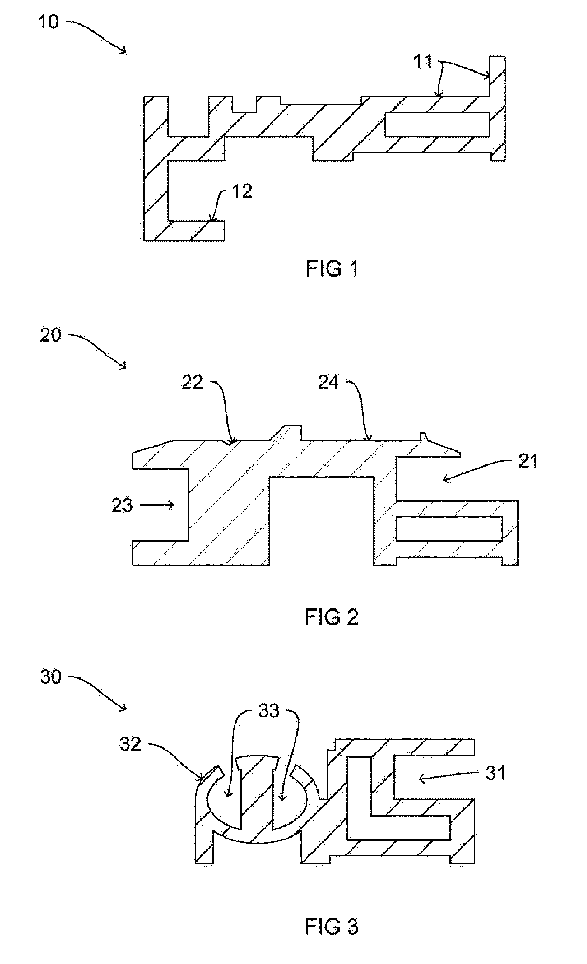

- Figure 1: Schematic cross section of the base mounting profile in a preferential form of embodiment of the invention;
- Figure 2: Schematic cross section of the top mounting profile in a preferential form of embodiment of the invention;
- Figure 3: Schematic cross section of the left-hand mounting profile in a preferential form of embodiment of the invention;

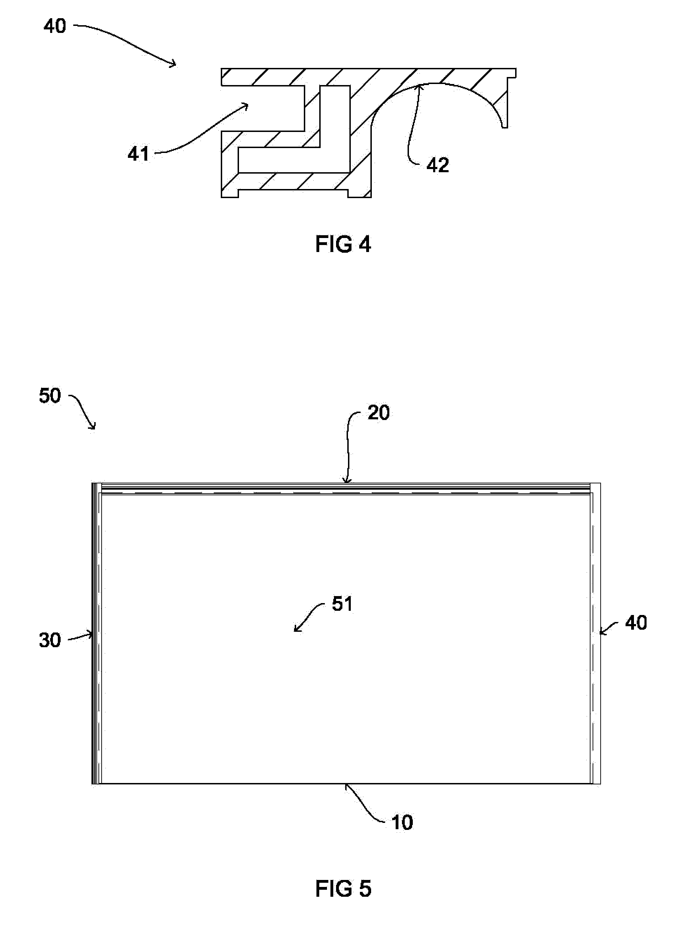

- Figure 4: Schematic cross section of the right-hand mounting profile in a preferential form of embodiment of the invention;
- Figure 5: Assembly scheme of the profiles that make up the frame in a preferential form of embodiment of the invention;

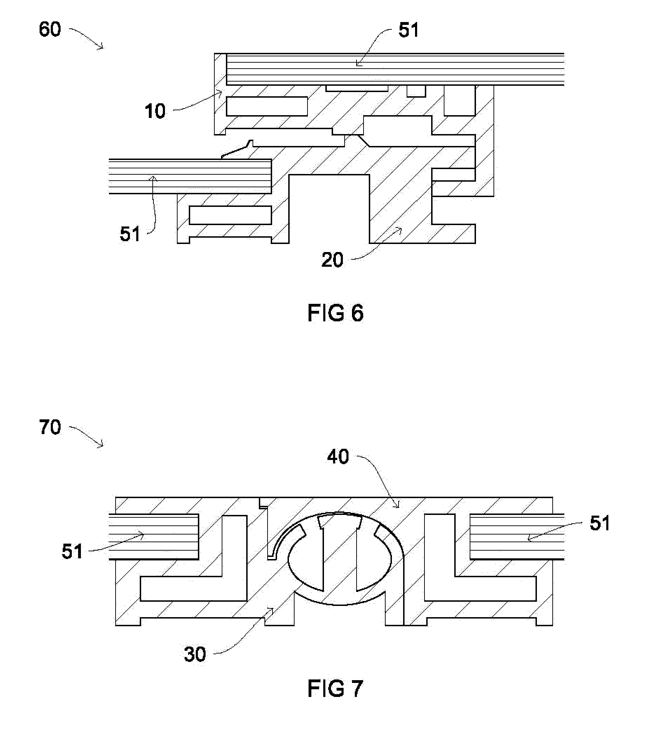

- Figure 6: Schematic cross section representing the junction between the base mounting profile and the top mounting profile;
- Figure 7: Schematic cross section representing the junction between the right-hand mounting profile and the left-hand mounting profile;

### Numbering Used in the Drawings

- 10: Base mounting profile:
- 11: U-shaped part designed to receive and secure the base edge of the panel;
- 12: L-shaped appendage designed to be fitted into the top mounting profile;
- 20: Top mounting profile;
- 21: U-shaped part of the top mounting profile designed to receive and secure the upper edge of the panel;
- 22: Threaded hole for the insertion of fastening devices into the supporting structure;
- 23: U-shaped part of the top mounting profile designed to receive and immobilize the base mounting profile;
- 24: Gasket site;
- 30: Left-hand mounting profile;
- 31: U-shaped part of the left-hand mounting profile designed to receive and secure the upper edge of the panel;
- 32: Elliptical hooking appendage with the right-hand mounting profile;
- 33: Condensation gathering groove;
- 4: Right-hand mounting profile;
- 41: L-shaped part of the right-hand mounting profile designed to receive and secure the upper edge of the panel;
- 42: Hook-shaped appendage with the left-hand mounting profile;
- 50: Frame;
- 51: Panel;

### Detailed Description of the Invention

A current preferential form of embodiment for the realization and implementation of the invention will be described hereafter. The purpose of this patent application will be described in detail for exemplification purposes only since the invention can be realized in any size, even in accordance with different proportions than those indicated.

With reference to the attached drawings, in its preferential form of embodiment, the frame (50), designed to assemble panels (51) in an indefinite number of rows and columns, includes: a base mounting profile (10) designed to be joined to the lower edge of the panel, a top mounting profile (20) designed to be joined to the upper edge of the panel, and two mounting profiles, a left-hand one (30) and a right-hand one (40), designed to be joined respectively to the left-hand and right-hand edges of the panel.

The base mounting profile (10), in the L-shaped part (11) positioned on the upper surface of the mounting profile itself, receives and supports the panel (51). An L-shaped appendage (12) is found on the lower part of the mounting profile.

The top mounting profile (20) has a U-shaped cavity (21) designed to receive and support the panel (51). Opposite the side in which said panel is housed, there is a second U-shaped cavity (23) designed to receive the L-shaped appendage (12).

In a structure in which there are several frames in the same column, the moulded appendage (12) of the top mounting profile of each frame assures the locking together (60) of each component with its corresponding component in the row below. The lower leg of the "L" of the moulded appendage (12), in fact, is driven into the appropriate U-shaped cavity (21) found on the top mounting profile of the adjacent component (20).

The joint between the two components is further sealed by a gasket placed on the contact surface between the two mounting profiles (24).

The left-hand mounting profile (30) includes a first U-shaped part (31) to receive and secure the panel (51) and a second elliptically shaped part (32).

The right-hand mounting profile (40) includes a U-shaped part (41) for the fastening of the panel (51) and a moulded protrusion whose upper face is flat, while the lower face is hollowed out in such a way as to be able to be placed on the elliptical component of the left-hand mounting profile (30).

In a structure in which there are several frames in the same row, the elliptically shaped part of the left-hand mounting profile (32) of each frame is linked together (70) with the moulded protrusion present on the right-hand mounting profile (42) of the adjacent panel, thus guaranteeing the sealing of the joint between the two components.

The two grooves (33) present on the elliptically shaped part (32) of each left-hand mounting profile assure the collection and the draining of possible condensate water.

The resulting component of the union of the panel (51) with the four mounting profiles (10, 20, 30 and 40) that make up the frame (50) is rigid enough to be able to be transported and assembled with ease.

The assembly of several components takes place, starting from the lower right-hand corner of the field to be covered, through bolts or similar fastening devices (22).

The assembly continues, completing the first row by overlapping the elliptical appendages of adjacent panels (32, 42) and aligning the base mounting profiles at the bottom.

Once the first row is completed, the assembly continues with the second row following the same procedure, always starting from the rightmost component.

## Claims

1. What is claimed is a frame (50) designed to be employed as a framework for plate-like components (51) of various materials, and including two or more mounting profiles of which at least one is equipped with a part moulded in the form of an "L" (12) or a "U" (21, 31, 41), said moulded part being designed to hold or support one of the edges of said plate-like component and said frame **characterized in that** it includes at least one mounting profile equipped with an appendage (12) protruding from the body of said mounting profile and **in that** said frame includes at least one other mounting profile that has a fissure (23) designed to receive said appendage.

2. Frame (50) according to claim 1, **characterized in that** said frame (50) includes two mounting profiles, one of said mounting profiles being equipped with an elliptically shaped part (32) and the other one of said mounting profiles being equipped with a moulded part (42) in such a way that the said two parts of the mounting profile are able to be partially or completely overlapped.

3. Frame (50) according to claim 1 or 2, **characterized in that** said frame (50) is part of a system that includes two or more of said frames, arranged in rows or columns, with the linking together of the appendages (12) with the fissures present on the adjacent panels or linked together by means of the juxtaposition of the elliptically shaped parts (32) with the moulded parts present on the adjacent profiles.
